# FASCICULE DE BREVET EUROPEEN

(11) **EP 0 674 108 B1**
(45) Date de publication et mention de la délivrance du brevet: **10.06.1998**
(21) Numéro de dépôt: 95400158.2
(22) Date de dépôt: 25.01.1995
(51) Int. Cl.: F16B 2/04, F16B 13/06

(54) **Organe de fixation par expansion radiale**
Radial aufweitbares Befestigungselement
Device for fastening by radial expansion

(30) Priorité: 28.01.1994 FR 9400964
(43) Date de publication de la demande: 27.09.1995
(73) Titulaire: GEC ALSTHOM SYSTEMES ET SERVICES SA, 75016 Paris (FR)
(72) Inventeur: Holub, Serge, F-44700 Orvault (FR); Coue, Jean-Pierre, F-44240 La Chapelle S/Erdre (FR); Ollivaud, Bernard, F-44850 Le Cellier (FR)
(74) Mandataire: Gosse, Michel

(56) Documents cités:
- FR-A- 1 056 501
- FR-A- 2 647 163
- GB-A- 628 912
- US-A- 2 236 079

## Description

La présente invention concerne un organe de fixation par expansion radiale.

L'organe de fixation de l'invention est destiné à être logé et fixé solidement dans un trou cylindrique d'une paroi quelconque de façon à pouvoir y accrocher, suspendre, un objet quelconque. L'axe de l'organe de fixation peut être horizontal ou vertical ou encore dans une autre position. Il est cependant particulièrement bien adapté pour être fixé dans un trou d'axe vertical pratiqué dans une paroi horizontale et donc pour suspendre un objet, l'organe de fixation travaillant à la traction.

Une application particulière visée consiste dans la suspension d'une plaque support d'un bras télémanipulateur suspendue à une plaque tubulaire horizontale d'un générateur de vapeur pour la visite des tubes. La plaque est alors suspendue au moyen de quatre organes de fixation et au fur et à mesure de la visite des tubes, la plaque est déplacée de façon à permettre la visite de tous les tubes. Les organes de fixation de la plaque support doivent alors pouvoir être démontés, sans dommage, pour être réutilisés pour un nouvel ancrage par expansion radiale à un autre emplacement de la plaque.

L'organe de fixation de l'invention est particulièrement bien adapté à une telle application, mais peut être utilisé pour tout autre besoin, et par exemple pour une suspension sur une paroi verticale.

On connaît par le brevet français 2 647 163 un organe de fixation qui comprend un tirant sur lequel est monté un tampon expansible entouré d'une bague fendue dont la longueur est inférieure à la longueur du tampon, le tampon expansible s'appuyant contre un embout lié à une extrémité du tirant.

A l'autre extrémité du tirant est enfilée une douille qui prend appui sur le tampon expansible par l'intermédiaire d'une rondelle d'appui. Un écrou est enfin vissé sur le tirant et permet de rapprocher l'un vers l'autre l'embout et la douille provoquant le raccourcissement axial du tampon et donc son expansion radiale ainsi que celle de la bague fendue qui l'entoure. La surface interne de la bague fendue possède une rainure hélicoïdale.

Dans cette configuration, le raccourcissement axial du tampon expansible est limité à l'appui de l'embout et de la rondelle d'appui contre les faces opposées de la bague fendue, ce qui limite l'expansion radiale. En outre, il existe pour des pressions élevées des problèmes de fluage du tampon qui s'échappe entre l'embout et la paroi circulaire du trou dans lequel est enfilé l'organe ainsi qu'entre la rondelle d'appui et cette paroi, ce qui rend la réutilisation ultérieure et le démontage difficiles, par non rétractation radiale de la bague fendue. L'extirpation est possible, mais par arrachement, ce qui détériore la surface du trou, ce qui est inadmissible lorsqu'il s'agit de tubes d'une plaque tubulaire.

La présente invention a pour but d'améliorer les performances, et a pour objet un organe de fixation par expansion radiale, comprenant un tirant sur lequel est monté un tampon expansible entouré d'une bague fendue sur toute sa longueur, une extrémité du tirant étant liée à un embout, ledit tampon étant pris en sandwich entre ledit embout et une pièce d'appui également montée sur ledit tirant, et comportant en outre des moyens permettant de rapprocher mutuellement ledit embout et ladite pièce d'appui de façon à comprimer axialement le tampon et assurer son expansion radiale et celle de ladite bague fendue, caractérisé en ce que ledit tampon étant au repos, non comprimé, ladite bague fendue a une longueur supérieure à celle dudit tampon, ladite pièce d'appui comportant une partie constituant un fouloir apte à pénétrer dans ladite bague fendue, et en ce que l'extrémité de ladite bague fendue comporte un collet, radialement centripète, contre lequel s'appuient, de part et d'autre dudit collet, le tampon expansible et ledit embout.

On va maintenant donner la description d'un exemple de mise en oeuvre de l'invention en se reportant au dessin annexé dans lequel :

La figure 1 montre en coupe axiale un organe de fixation selon l'invention, introduit dans un tube d'une plaque tubulaire, et dans un état au repos, non expansé.

La figure 2 montre l'une des pièces de l'organe de fixation : la bague fendue.

La figure 3 est une vue de dessus de la figure 2.

La figure 4 est une vue partielle en coupe selon IV-IV de la figure 2.

La figure 5 est une vue agrandie montrant le détail V de la figure 1.

La figure 6 est une variante de la figure 1.

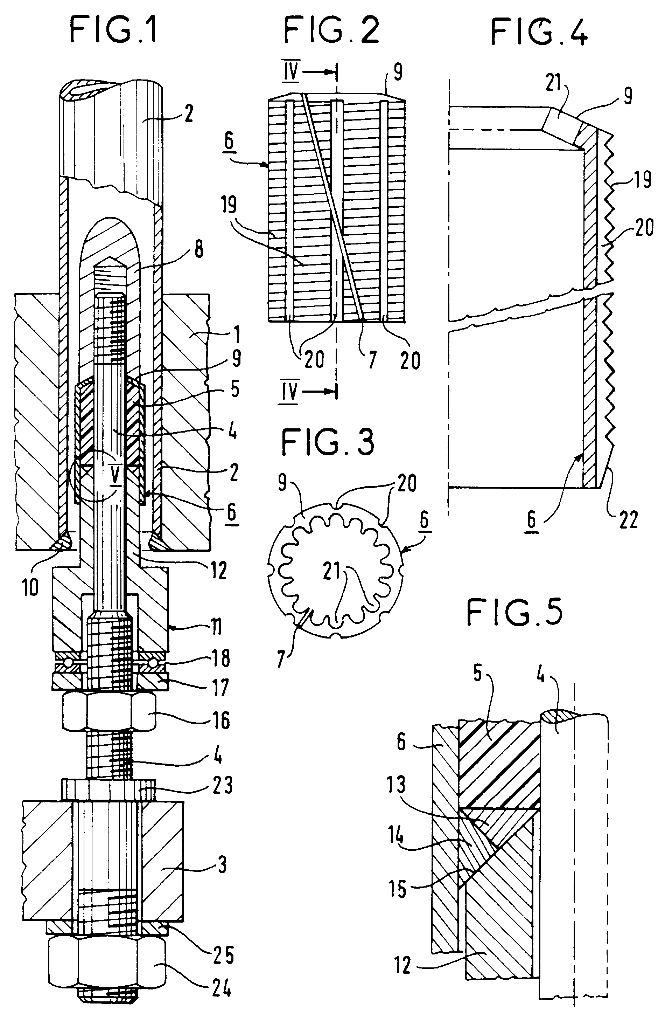

En se reportant à la figure 1, on voit une portion d'une plaque tubulaire 1 et un tube 2.

Dans ce tube 2, est introduit un organe de fixation par expansion radiale servant à suspendre à la plaque tubulaire 1 une pièce 3. En l'occurrence, il s'agit d'une plaque 3 suspendue à chacun de ses quatre coins par un tel organe de fixation.

L'organe de fixation comprend d'abord un tirant 4 sur lequel est monté un tampon expansible 5 entouré d'une bague fendue 6 sur toute sa longueur.

Comme on le voit sur la figure 2, la fente 7 n'est pas parallèle à l'axe, mais oblique. En outre, la bague fendue 6 est au moins aussi longue et de préférence plus longue, comme c'est ici le cas, que le tampon expansible 5 dans sa position de repos. Une extrémité du tirant 4 est fixée à un embout 8, par exemple par vissage, et la bague fendue 6 qui comporte un collet 9, radialement centripète, vient s'appuyer contre l'embout 8. Le tampon expansible 5 vient lui-même en appui contre ce collet 9. Le tampon expansible 5 est donc bien positionné sur le tirant 4 et par rapport à la bague fendue 6 et le collet 9 empêche la bague fendue 6 de glisser vers l'arrière lors de l'introduction de l'organe de fixation dans le tube 2 si, lors de cette introduction, la bague vient heurter un rétrécissement tel qu'un cordon de soudure 10.

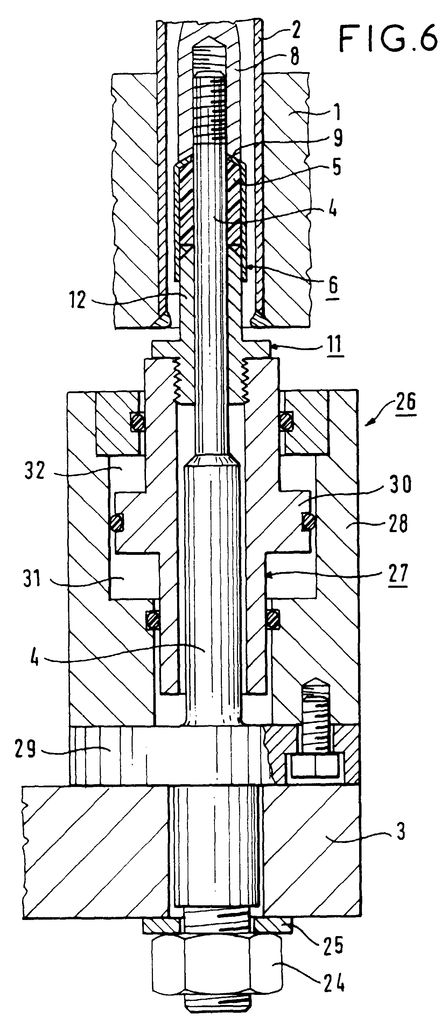

Sur le tirant 4 est en outre montée une pièce d'appui 11. Cette pièce d'appui 11 comporte une partie formant fouloir 12 pénétrant dans la bague fendue 6. Ainsi, le diamètre du fouloir 12 est au plus égal au diamètre interne de la bague fendue 6 avant toute expansion radiale. Entre l'extrémité du fouloir 12 et le tampon expansible 5, engagées à l'intérieur de la bague fendue 6, sont disposées deux bagues fendues anti-extrusion 13 et 14. La figure 5 permet de mieux voir ce détail. Bien entendu, la fente de chaque bague anti-extrusion 13 et 14, non visible sur les figures, est décalée l'une par rapport à l'autre. L'extrémité du fouloir 12 forme une surface d'appui annulaire conique 15 contre les bagues anti-extrusion 13 et 14.

Enfin, un écrou 16, monté sur une partie filetée du tirant 4, vient prendre appui contre l'autre extrémité de la pièce d'appui 11 par l'intermédiaire d'une rondelle 17 et d'une butée à roulement 18.

Ainsi, le vissage de l'écrou 16 sur le tirant 4 permet le rapprochement mutuel de l'embout 8 et de la pièce d'appui 11 prenant en sandwich le tampon expansible 5 provoquant sa compression axiale, et par conséquent son expansion radiale ainsi que celle de la bague fendue 6. La butée à roulement 18 évite la rotation de la pièce d'appui 11 lors du vissage de l'écrou 16 sur le tirant 4.

L'utilisation des bagues anti-extrusion 13, 14, combinées avec le fait que la bague fendue 6 est plus longue que le tampon expansible 5 permet d'éviter l'extrusion du tampon expansible hors de la bague fendue. Le collet 9 participe également à cet effet. Cela permet d'augmenter considérablement la compression axiale, donc l'expansion radiale, et par le fait même, l'effort d'arrachement. En outre, l'absence d'extrusion permet le démontage et la réutilisation de l'organe de fixation.

Avantageusement, afin d'améliorer le rendement de la transformation de la pression axiale en pression radiale, la surface interne de la bague fendue 6 est lisse pour éviter les frottements axiaux.

En revanche, la surface externe de la bague fendue 6 peut être rugueuse par le moyen de stries, moletage ou par confection d'une rainure hélicoïdale 19 comme on le voit ici sur les figures 2 et 4 assurant, lors de l'expansion radiale, un bon accrochage de l'organe de fixation. Dans l'organe de fixation réalisé pour des essais, la bague fendue comporte une rainure hélicoïdale 19 dont le pas est de 1 mm.

Afin d'assurer une meilleure élasticité radiale de la bague fendue, permettant une meilleure rétraction radiale lors d'un desserrage pour un démontage, la bague fendue 6 porte sur sa surface extérieure une pluralité de rainures 20 parallèles aux génératrices de la bague et le collet porte des crans 21. Ces mesures permettent, lors des introductions et des extractions successives, et grâce à une déformation élastique radiale importante, de franchir un éventuel étranglement du tube 2, tel que le cordon de soudure 10 par exemple.

Dans le même but du franchissement d'un étranglement, lors d'une extraction, la surface externe de la bague fendue 6 porte à son extrémité, côté écrou 16, un chanfrein 22. Le collet 9 de la bague fendue 6, assure, en fonctionnement, le transfert vers la bague 6 de l'effort axial transmis par l'embout 8. Des essais ont donné un effort d'arrachement axial de l'ordre de 2500 daN. Ce résultat étant obtenu sans détérioration de la paroi interne du tube et avec un couple nominal de serrage de l'écrou 16 de l'ordre de 5 daN x m. La déformation élastique axiale, vue de la pièce 3, est de l'ordre de 0,5 mm sous 1000 daN.

La pièce 3, à supporter, est liée au tirant 4 qui comporte, à son extrémité opposée à l'embout 8, une partie filetée. La pièce 3 vient en appui contre un épaulement 23 du tirant et est maintenue en appui contre cet épaulement par un écrou 24 avec l'interposition d'une rondelle 25.

Dans le cas où l'on doit installer l'organe de fixation et l'ancrer à distance, par exemple en cas de télémanipulation ou d'automatisation, l'effort de compression sur la pièce d'appui 11 peut être obtenu, en remplacement de l'écrou de serrage 16, par l'adaptation de tous types d'actionneurs positifs à commande électrique, pneumatique, hydraulique, électro-magnétique...

Ainsi, la figure 6 illustre le cas où on utilise à la place de l'écrou 16 un vérin 26 à tige creuse 27, à double effet. Le vérin comprend un corps extérieur 28 lié à une portée élargie 29 du tirant 4. La tige creuse 27 est traversée par le tirant 4 et est fixée à la pièce d'appui 11. La tige creuse 27 comprend un piston 30 qui partage l'intérieur du corps 28 en deux chambres 31 et 32. L'envoi d'un fluide hydraulique dans la chambre 31 assure le rapprochement de l'embout 8 et de la pièce d'appui 11 donc la compression axiale du tampon 5 et par suite son expansion radiale ainsi que celle de la bague fendue 6.

Le démontage s'effectue par l'envoi de la pression dans la chambre 32.

## Revendications

1. Organe de fixation par expansion radiale, comprenant un tirant (4) sur lequel est monté un tampon expansible (5) entouré d'une bague fendue (6) sur toute sa longueur, une extrémité du tirant étant liée à un embout (8), ledit tampon (5) étant pris en sandwich entre ledit embout (8) et une pièce d'appui (11) montée coulissante sur ledit tirant (4), et comportant en outre des moyens (16) permettant de rapprocher mutuellement ledit embout (8) et ladite pièce d'appui (11) de façon à comprimer axialement le tampon (5) et assurer son expansion radiale et celle de ladite bague fendue (6), caractérisé en ce que ledit tampon (5) étant au repos, non comprimé, ladite bague fendue (6) a une longueur supérieure à celle dudit tampon, ladite pièce d'appui (11) comportant une partie constituant un fouloir (12) apte à pénétrer dans ladite bague fendue (6), et en ce que l'extrémité de ladite bague fendue (6) comporte un collet (9), radialement centripète, contre lequel s'appuient, de part et d'autre dudit collet (9), le tampon expansible (5) et ledit embout (8).

2. Organe de fixation selon la revendication 1, caractérisé en ce que la surface intérieure de ladite bague fendue (6) est lisse.

3. Organe de fixation selon l'une des revendications 1 ou 2, caractérisé en ce que la fente (7) de ladite bague fendue (6) n'est pas parallèle à l'axe, mais oblique.

4. Organe de fixation selon l'une des revendications 1 à 3, caractérisé en ce que ledit collet (9) comporte des crans (21).

5. Organe de fixation selon l'une des revendications 1 à 4, caractérisé en ce que la surface externe de ladite bague fendue (6) comporte des rainures (20) parallèles aux génératrices.

6. Organe de fixation selon l'une des revendications 1 à 5, caractérisé en ce que ladite bague fendue (6) comporte un chanfrein (22) du côté de son extrémité située vers ladite pièce d'appui (11), sur sa surface externe.

7. Organe de fixation selon l'une des revendications 1 à 6, caractérisé en ce que la surface externe de ladite bague fendue (6) est rendue rugueuse par stries, moletage ou confection d'une rainure hélicoïdale (19).

8. Organe de fixation selon l'une des revendications précédentes, caractérisé en ce que deux bagues fendues anti-extrusion (13, 14) sont disposées, engagées dans ladite bague fendue (6), entre l'extrémité du fouloir (12) et ledit tampon extensible (5).

9. Organe de fixation selon la revendication 8, caractérisé en ce que la fente de chaque dite bague anti-extrusion (13, 14) est décalée l'une par rapport à l'autre, l'extrémité dudit fouloir (12) ayant une surface annulaire conique (15) prenant appui contre les deux bagues (13, 14).

10. Organe de fixation selon l'une des revendications 1 à 9, caractérisé en ce que ledit tirant (4) comporte à son extrémité opposée à celle liée audit embout (8), des moyens (24, 25) pour la fixation d'une pièce (3) à supporter.

11. Organe de fixation selon l'une des revendications 1 à 10, caractérisé en ce que lesdits moyens permettant de rapprocher mutuellement l'embout (8) et la pièce d'appui (11) comprennent un écrou (16) monté sur une partie filetée du tirant (4).

12. Organe de fixation selon la revendication 11, caractérisé en ce qu'une butée à roulement est interposée entre ledit écrou (16) et ladite pièce d'appui (11).

13. Organe de fixation selon l'une des revendications 1 à 10, caractérisé en ce que lesdits moyens permettent de rapprocher mutuellement l'embout (8) et la pièce d'appui (11) comprennent un vérin à double effet comportant un corps extérieur (28) lié au tirant (4) et une tige creuse (27) liée à ladite pièce d'appui (11) et traversée par ledit tirant (4) et comportant une portée élargie (30) formant piston partageant l'intérieur du corps extérieur (28) en deux chambres (31, 32).

## Claims

1. A member for fixing by radial expansion, the member comprising a pull rod (4) having an expandable plug (5) mounted thereon and surrounded over its entire length by a split ring (6), one end of the pull rod being connected to an endpiece (8), said plug (5) being sandwiched between said endpiece (8) and a thrust part (11) slidably mounted on said pull rod (4), the member further including means (16) enabling said endpiece (8) to be moved towards said thrust part (11) in such a manner as to compress the plug (5) axially, thereby causing both it and said split ring (6) to expand radially, the member being characterized in that when said plug (5) is uncompressed and at rest, said split ring (6) is longer than said plug, said thrust part (11) including a portion that constitutes a ram (12) suitable for penetrating into said split ring (6), and in that the end of said split ring (6) includes a radially inwardly extending collar (9) having the expandable plug (5) and said endpiece (8) bearing against opposite sides thereof.

2. A fixing member according to claim 1, characterized in that the inside surface of said split ring (6) is smooth.

3. A fixing member according to claim 1 or 2, characterized in that the split (7) of said split ring (6) is not parallel to the axis, but is oblique.

4. A fixing member according to any one of claims 1 to 3, characterized in that said collar (9) includes notches (21).

5. A fixing member according to any one of claims 1 to 4, characterized in that the outside surface of said split ring (6) includes grooves (20) parallel to its generator lines.

6. A fixing member according to any one of claims 1 to 5, characterized in that said split ring (6) includes a chamfer (22) on its outside surface adjacent to its end facing said thrust part (11).

7. A fixing member according to any one of claims 1 to 6, characterized in that the outside surface of said split ring (6) is roughened by stripes, knurling, or the provision of a helical groove (19).

8. A fixing member according to any preceding claim, characterized in that two anti-extrusion split rings (13, 14) are disposed within said split ring (6) between the end of the ram (12) and said expandable plug (5).

9. A fixing member according to claim 8, characterized in that the splits in said anti-extrusion split rings (13, 14) are offset relative to each other, the end of said ram (12) having a conical annular surface (15) bearing against the two rings (13, 14).

10. A fixing member according to any one of claims 1 to 9, characterized in that said pull rod (4) includes means (24, 25) at its end opposite from its end connected to said endpiece (8) for the purpose of securing it to a part (3) to be supported.

11. A fixing member according to any one of claims 1 to 10, characterized in that said means enabling the endpiece (8) and the thrust part (11) to be moved towards each other comprise a nut (16) mounted on a threaded portion of the pull rod (4).

12. A fixing member according to claim 11, characterized in that a thrust ball-bearing is interposed between said nut (16) and said thrust part (11).

13. A fixing member according to any one of claims 1 to 10, characterized in that said means enabling the endpiece (8) and the thrust part (11) to be moved towards each other comprise a double-acting actuator having an outside body (28) connected to the pull rod (4) and a hollow piston rod (27) connected to said thrust part (11) and having said pull rod (4) passing therethrough, the piston rod including an enlarged piston-forming bearing surface (30) that subdivides the inside of the outer body (28) into two chambers (31, 32).

## Patentansprüche

1. Radial aufweitbares Befestigungselement mit einer Zugstange (4), an der an aufweitbarer Stopfen (5) umgeben von einem geschlitzten Ring (6) auf seiner gesamten Länge montiert ist, wobei ein Ende der Zugstange mit einem Ansatzstück (8) verbunden ist, der Stopfen (5) zwischen dem Ansatzstück (8) und einem Druckteil (11) gefasst ist, das gleitbeweglich an der Zugstange (4) montiert ist, ferner mit Mitteln (16), die es gestatten, das Ansatzstück (8) und das Druckteil (11) einander anzunähern, um den Stopfen (5) axial zu komprimieren und dessen radiale Aufweitung sowie die des geschlitzten Ringes (6) sicherzustellen, **dadurch gekennzeichnet,** dass, wenn der Stopfen (5) in Ruhe und nicht komprimiert ist, der geschlitzte Ring (6) eine größere Länge als die des Stopfens hat, wobei das Druckteil (11) einen Abschnitt umfasst, der einen Verdränger (12) bildet, dar in der Lage ist, in den geschlitzten Ring (6) einzudringen, und dass das Ende des geschlitzten Ringes (6) einen radial zusammenlaufenden Kragen (9) umfasst, auf den beiderseits des Kragens (9) der aufweitbare Stopfen (5) und das Ansatzstück (8) drücken.

2. Befestigungselement nach Anspruch 1 dadurch gekennzeichnet, dass die innere Oberfläche des geschlitzten Ringes (6) glatt ist.

3. Befestigungselement nach einem der Ansprüche 1 oder 2, dadurch gekennzeichnet, dass der Schlitz (7) des geschlitzten Ringes (6) nicht parallel zur Achse, sondern schräg ist.

4. Befestigungselement nach einem der Ansprüche 1 bis 3, dadurch gekennzeichnet, dass der Kragen (9) Kerben (21) aufweist.

5. Befestigungselement nach einem der Ansprüche 1 bis 4, dadurch gekennzeichent, dass die äußere Oberfläche des geschlitzten Ringes (6) zu den Umhüllenden parallele Rillen (20) aufweist.

6. Befestigungselement nach einem der Ansprüche 1 bis 5, dadurch gekennzeichnet, dass der geschlitzte Ring (6) eine Fase (22) auf Seiten seines zum Druckteil (11) hin liegenden Endes an seiner Außenoberfläche aufweist.

7. Befestigungselement nach einem der Ansprüche 1 bis 6, dadurch gekennzeichnet, dass die Außenoberfläche des geschlitzten Ringes (6) durch Riefen, Rändeln oder Bilden einer schraubenlinienförmigen Rille (19) aufgerauht ist.

8. Befestigungselement nach einem der vorhergehenden Ansprüche, dadurch gekennzeichnet, dass zwei geschlitzte Antiextrusionsringe (13, 14) in den geschlitzten Ring (6) eingreifend zwischen dem Ende des Verdrängers (12) und dem aufweitbaren Stopfen (5) angeordnet sind.

9. Befestigungselement nach Anspruch 8, dadurch gekennzeichnet, dass der Schlitz jedes Antiextrusionsringes (13, 14) in Bezug auf den anderen versetzt ist, wobei das Ende des Verdrängers (12) eine kegelringförmige Oberfläche (15) hat, die auf die zwei Ringe (13, 14) drückt.

10. Befestigungselement nach einem der Ansprüche 1 bis 9, dadurch gekennzeichnet, dass die Zugstange (4) an ihrem Ende, das dem mit dem Ansatzstück (8) verbundenen gegenüberliegt, Mittel (24, 25) zur Befestigung eines zu tragenden Teiles (3) aufweist.

11. Befestigungselement nach einem der Ansprüche 1 bis 10, dadurch gekennzeichnet, dass die Mittel, die es gestatten, das Ansatzstück (8) und das Druckteil (11) einander zu nähern, eine auf einem gewindetragenden Abschnitt der Zugstange (4) montierte Mutter (16) umfassen.

12. Befestigungselement nach Anspruch 11, dadurch gekennzeichnet, dass ein Wälzlageranschlag zwischen der Mutter (16) und dem Druckteil (11) angeordnet ist.

13. Befestigungselement nach einem der Ansprüche 1 bis 10, dadurch gekennzeichnet, dass die Mittel, die es gestatten, das Ansatzstück (8) und das Druckteil (11) einander zu nähern, einen doppelt wirkenden Kolben umfassen, der einen mit der Zugstange (4) verbundenen äußeren Körper (28) und eine mit dem Druckteil (11) verbundene hohle Stange (27) aufweist, die von der Zugstange (4) durchlaufen ist und einen verbreiterten Ansatz (30) aufweist, der das Innere des äußeren Körpers (28) in zwei Kammern (31, 32) aufteilt.
